# EUROPÄISCHE PATENTSCHRIFT

(11) **EP 1 447 288 B1**
(45) Veröffentlichungstag und Bekanntmachung des Hinweises auf die Patenterteilung: **23.05.2007**
(21) Anmeldenummer: 04001638.8
(22) Anmeldetag: 27.01.2004
(51) Int. Cl.: B60S 1/08

(54) **Wischeranlage für Fahrzeug-Windschutzscheiben**
Wiper system for vehicle windscreens
Système d'essuie-glace pour pare-brise de véhicules

(30) Priorität: 17.02.2003 DE 10306495
(43) Veröffentlichungstag der Anmeldung: 18.08.2004
(73) Patentinhaber: ROBERT BOSCH GMBH, 70442 Stuttgart (DE)
(72) Erfinder: Brunner, Rene, 76448 Durmersheim (DE); Guettinger, Joachim, 77855 Achern (DE); Grass, Ansgar, 77746 Schutterwald-Langhurst (DE); Wegner, Norbert, 77815 Buehl (DE); Habay, Isabelle, 67000 Strasbourg (FR); Gabriel De Dias, Orlando, 76131 Karlsruhe (DE); Rummel, Michael, 77855 Achern-Oensbach (DE); Delelee-Prehaut, Guillaume, 71634 Ludwigsburg (DE)

(56) Entgegenhaltungen:
- EP-A- 0 405 745
- DE-A1- 4 032 922
- DE-A1- 10 113 678

## Beschreibung

### Stand der Technik

Die Erfindung geht aus von einer Wischeranlage für Fahrzeug-Windschutzscheiben mit mindestens zwei Scheibenwischern nach dem Oberbegriff des Anspruchs 1.

Zum Reinigen der Windschutzscheiben an Kraftfahrzeugen sind verschiedene Wischanlagen bekannt. Bei den Wischfeldern unterscheidet man hauptsächlich Einhebelwischfelder und Zweihebelwischfelder. Bei den Zweihebelwischfeldern können die Wischhebel der Scheibenwischer im Gleichlauf oder im Gegenlauf angetrieben werden. Als Antrieb dient dabei entweder nur ein Wischermotor für eine Drehrichtung, die über ein Kurbelgetriebe mit einem Wischergestänge in eine oszillierende Schwenkbewegung der Scheibenwischer umgesetzt wird, oder je ein Wischermotor mit reversierendem Antrieb für jeden Scheibenwischer. Aus der EP 01 84 312 A2 ist eine derartige Wischeranlage bekannt, bei der die beiden Wischermotore über ein Steuergerät aktiviert werden. Dabei wird die Position der Scheibenwischer jeweils mittels Positionssensoren über je eine Steuerleitung an das Steuergerät übermittelt und die Wischermotore werden abhängig von den Positionssignalen vom Steuergerät derart angesteuert, dass bei sich überlappenden Wischfeldern keine Kollision der Scheibenwischer stattfindet. Dabei ist nachteilig, dass jeder Wischermotor mit einer Steuer- und einer Signalleitung am Steuergerät angeschlossen ist.

Aus der DE 101 13 678 A1 ist ferner eine Wischeranlage für Kraftfahrzeuge bekannt, bei der zwei Wischermodule, bestehend aus Wischermotor, Getriebe und elektronischer Steuerung, miteinander korrespondieren und wobei das fahrerseitige Wischermodul einen Reversiermotor und das beifahrerseitige Wischermodul einen Rundläufermotor aufweist. Das Wischermodul auf der Fahrerseite ist über eine Steuerleitung mit der Zentralelektronik des Kraftfahrzeugs verbunden und lässt sich von einem daran angeschlossenen Wischerschalter in Betrieb nehmen.

Beim vorerwähnten Stand der Technik ist nachteilig, dass bei der Herstellung der Wischeranlage für jeden Fahrzeugtyp mindestens zwei unterschiedliche Wischermodule benötigt werden. Falls aus Platzgründen die Wischermodule auch noch unterschiedliche Getriebelagen aufweisen müssen, werden für Linkslenker- und Rechtslenker-Fahrzeuge sogar jeweils zwei Wischermodule und somit für jeden Fahrzeugtyp insgesamt vier Wischermodule erforderlich.

Mit der vorliegenden Lösung wird angestrebt, die Anzahl der bereit zu stellenden unterschiedlichen Wischermodule zu reduzieren und damit die Herstell- und Lagerkosten zu verringern.

### Vorteile der Erfindung

Die erfindungsgemäße Wischeranlage mit den frei konfigurierbaren Steuerungen der Wischermodule hat den Vorteil, dass gleiche Wischermodule vielseitiger für Linkslenker- und Rechtslenker-Fahrzeuge verschiedener Fahrzeugtypen verwendbar sind, da sie erst nach ihrem Einbau als Master- oder Slavemodul konfiguriert werden. Dies erleichtert die Montage und reduziert die Kosten bei der Herstellung und Lagerhaltung, da mit den verbleibenden Typteilen höhere Stückzahlen produziert werden. Als weiterer Vorteil ist anzusehen, dass mit den frei konfigurierbaren Steuerungen der Master- und Slavemodule diese auch beim Austausch defekter Module in den Fahrzeugwerkstätten über ein am Steuergerät des Fahrzeugs anschließbares Diagnosegerät entsprechend dem Fahrzeugtyp und der Fahrzeugvariante konfiguriert werden können. Außerdem können die Wischermodule auch aus anderen Fahrzeugen, wie zum Beispiel aus Unfallfahrzeugen, ausgebaut und als Ersatzteil in andere Fahrzeuge verbaut werden, indem sie dann mittels eines Diagnosegerätes über das Fahrzeug-Steuergerät entsprechend umkonfiguriert werden können. Die Konfigurierung der Wischermodule mit identischer Steuerelektronik (Hardware) erfolgt dabei ebenso wie der Betrieb der Wischeranlage über das Steuergerät und eine Bordnetz-Schnittstelle zu den Wischermodulen, die in bekannter Weise in Kraftfahrzeugen als serielle Eindraht-Schnittstelle in LIN-Ausführung (Local Interconnect Network) genormt ist.

Vorteilhafte Weiterbildungen und Ausgestaltungen ergeben sich aus den übrigen, in den Unteransprüchen genannten Merkmalen. Für eine Betätigung der Wischermodule vor deren Konfigurierung ist es von Vorteil, wenn ihre Steuerung in einer werkseitigen Grundeinstellung als Slave-Steuerung konfiguriert ist. Des Weiteren ist es für die Montage der Wischeranlage von Vorteil, wenn die werkseitig feste Grundeinstellung mindestens eine abrufbare Wischkennlinie, die Erfassung einer Grundstellung, insbesondere eine erweiterte Parklage sowie gegebenenfalls eine Information über die Getriebelage des Wischermoduls enthält. Zweckmäßigerweise ist dabei in der werkseitigen Grundeinstellung auch noch ein Notlauf, z.b. mit verkleinertem Wischfeld und/oder Intervallwischen konfiguriert. Um bei Linkslenker- und Rechtslenker-Fahrzeugen einen einheitlichen Kabelbaum für die Wischanlage montieren zu können, ist es zweckmäßig, dass die Steuerungen aller Wischermodule über die Bordnetz-Schnittstelle an das Fahrzeug-Steuergerät angeschlossen sind. Für einen Austausch defekter Wischermodule oder eines defekten Steuergerätes ist es vorteilhaft, wenn die Steuerungen der Wischermodule über einen an sich bekannten Diagnosegerät-Anschluss des Fahrzeug-Steuergerätes konfigurierbar beziehungsweise umkonfigurierbar sind.

Zweckmäßigerweise wird zur Konfigurierung der Wischeranlage für jedes Wischermodul eine Information über die Auswahl der vom Fahrzeugtyp abhängigen Wischkennlinien mit Erfassung der oberen und unteren Umkehrlage bzw. Parklage in einer Fahrzeugkennung des Fahrzeug-Steuergerätes abgelegt. Für eine funktionssichere Ansteuerung der Wischeranlage werden ferner in zweckmäßiger Weise die jeweilige Wischkennlinie und Park- bzw. Umkehrlagen des Master- und des Slavemoduls über die Fahrzeugkennung vom Fahrzeug-Steuergerät in der Steuerung des Mastermoduls freigeschaltet, so dass in bekannter Weise die Steuerung des Mastermoduls die Sollwerte für das Slavemodul über die serielle Schnittstelle an dessen Steuerung überträgt. In vorteilhafter Weise wird dabei über die im Fahrzeug-Steuergerät abgelegte Fahrzeugkennung (Fahrzeugtyp und Linkslenker - oder Rechtslenker-Variante) die Steuerung des entsprechend links oder rechts angeordneten fahrerseitigen Wischermoduls als Master-Steuerung konfiguriert.

Um bei einem werkstattseitigen Austausch defekter Steuergeräte oder Wischermodule durch Ersatzteile oder durch Teile aus einem Unfallfahrzeug die Wischeranlage möglichst funktionsfähig zu halten beziehungsweise neu konfigurieren zu können, können in vorteilhafter Weise im Fahrzeug-Steuergerät geeignete Prüfprogramme abgelegt werden, die mit jedem Einschalten der Stromversorgung auf Klemme 15 des Bordnetzes aufgerufen werden. Dabei wird im Fahrzeug-Steuergerät die nach der Fahrzeugkennung vorgegebene Konfiguration des Mastermoduls in einer Plausibilitätsprüfung mit der vorhandenen, über die Bordnetz-Schnittstelle aufrufbaren Konfiguration der Master-Steuerung verglichen und beim Auftreten einer Abweichung über das Fahrzeug-Steuergerät ein Fehlersignal abgegeben. Für den Fall, dass bei einer Fehlermeldung eine Neukonfigurierung der Wischeranlage vor Ort nicht möglich ist, ist es zweckmäßig, bis zur Neukonfigurierung diese noch eingeschränkt betreiben zu können. Dazu wird in vorteilhafter Weise beim Auftreten einer Abweichung in der Plausibilitätsprüfung vom Fahrzeug-Steuergerät ein Notlaufprogramm für beide Wischermodule in der Master-Steuerung konfiguriert.

Mit dem Prüfprogramm lässt sich in vorteilhafter Weise beim Anschluss beider Wischermodule an die Bordnetz-Schnittstelle durch eine Plausibilitätsprüfung eine im Fahrzeug-Steuergerät abgelegte Links-/Rechtslenkervariante mit den über die Bordnetz-Schnittstelle aufrufbaren vorhandenen Daten der Wischermodule vergleichen und beim Auftreten einer Abweichung über das Fahrzeug-Steuergerät ein Fehlersignal abgeben.

Parallel zu der Plausibilitätsprüfung lässt sich das Prüfprogramm zur Vermeidung von Fehlfunktionen der Wischeranlage bei fehlender oder falscher Konfigurierung der Wischermodule in vorteilhafter Weise derart erweitern, dass die Master-Steuerung und Slave-Steuerung über ihre serielle Schnittstelle alle Rückmeldesignale der Slave-Steuerung bzw. Sollwerte der Master-Steuerung in einer Timeout-Überwachung erfasst und beim Ansprechen der Timeout-Überwachung das Slavemodul in die Parklage steuert sowie eine Fehlermeldung an das Fahrzeug-Steuergerät abgibt. Für Wischeranlagen, bei denen nur das fahrerseitige Wischermodul an die Bordnetz-Schnittstelle des Fahrzeug-Steuergerätes angeschlossen ist, kann in vorteilhafter Weise parallel zur Plausibilitätsprüfung in einem weiteren Prüfprogramm das Fahrzeug-Steuergerät einen Datenaustausch auf der Bordnetz-Schnittstelle in einer Timeout-Überwachung erfassen und beim Ansprechen der Timeout-Überwachung die Wischeranlage abschalten sowie ein Fehlersignal abgeben.

### Zeichnung

Weitere Einzelheiten der Erfindung sind in den nachfolgend beschriebenen Ausführungsbeispielen anhand der zugehörigen Zeichnungen näher erläutert. Es zeigen
Figur 1 eine schematische Darstellung einer Zweimotoren-Wischeranlage mit ungleichen Wischmodulen für ein Linkslenker-Fahrzeug,
Figur 2 die schematische Darstellung der Wischeranlage für ein Rechtslenker-Fahrzeug und
Figur 3 eine Wischeranlage mit gleichen Wischermodulen.
Figur 4 zeigt ein Flussdiagramm zur Konfigurierung der Wischeranlage vor dem Montieren der Wischhebel,
Figur 5 bis 8 zeigen Flussdiagramme verschiedener parallel oder nacheinander ablaufender Prüfvorgänge zur Vermeidung von Fehlfunktionen der Wischeranlage.

### Beschreibung der Ausführungsbeispiele

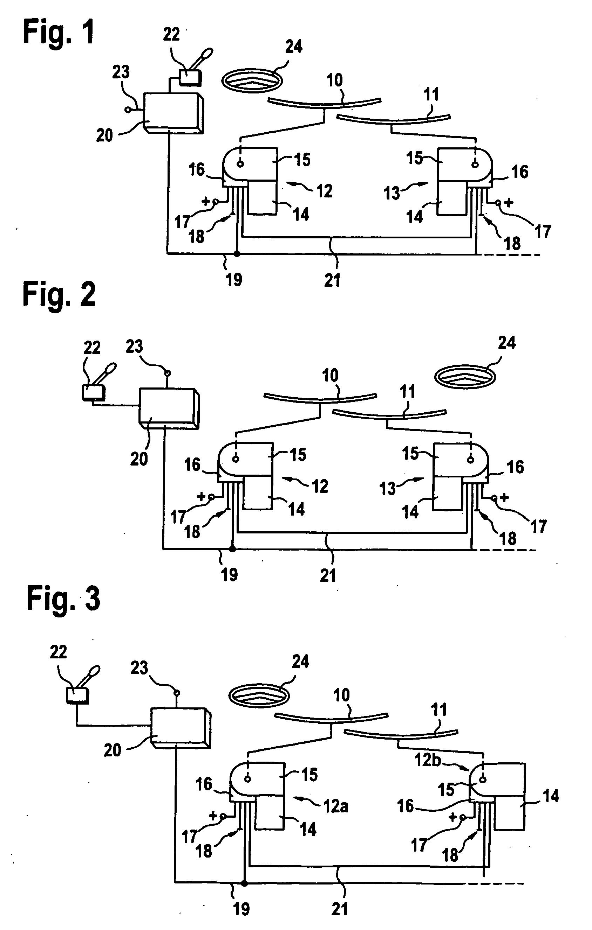

In Figur 1 ist eine Zweimotoren-Wischeranlage für die Frontscheibe eines Kraftfahrzeugs schematisch dargestellt. Die Wischeranlage hat zwei Scheibenwischer 10, 11, die jeweils auf der Abtriebsachse eines Wischermodules 12, 13 befestigt sind. Jedes Wischermodul 12, 13 besteht aus einem Reversiermotor 14, einem Getriebe 15 und einer elektronischen Steuerung 16. Jedes Wischermodul 12, 13 ist mit einer Plus-Klemme 17 an das Bordnetz des Kraftfahrzeugs anzuschließen und mit einem Masseanschluss 18 mit der Fahrzeugkarrosserie verbunden, welche das Massepotential des Bordnetzes bildet. Die Steuerung der beiden Wischermodule 12, 13 ist über eine Bordnetz-Schnittstelle 19 in Form einer Eindraht-Steuerleitung mit einem Fahrzeug-Steuergerät 20 verbunden. Die beiden Wischermodule 12, 13 sind außerdem mit ihrer Steuerung 16 über eine serielle Schnittstelle 21 in Form einer weiteren Steuerleitung unmittelbar miteinander verbunden. Am Fahrzeug-Steuergerät 20 .ist ferner ein Wischerschalter 22 angeschlossen, mit dem der Betrieb der Wischeranlage ausgelöst wird. Außerdem ist das Fahrzeug-Steuergerät 20 unter anderem mit einem Diagnoseanschluss 23 versehen, über den die Wischeranlage zu konfigurieren ist.

Aufgrund der vom Fahrzeugtyp abhängigen Einbauverhältnisse weisen die beiden Wischermodule 12, 13 unterschiedliche Getriebelagen auf, so dass für derartige Fahrzeuge zwei unterschiedlichen Wischermodultypen gefertigt werden müssen. Außerdem ergeben sich für die beiden Scheibenwischer 10, 11 unterschiedliche Wischfelder und Ruhelagen bei Rechtslenker- und Linkslenker-Fahrzeugen. Während Figur 1 eine Wischeranlage für ein Linkslenker-Fahrzeug durch Andeutung eines Lenkrades 24 auf der linken Seite zeigt, ist in Figur 2 eine entsprechende Wischeranlage für ein Rechtslenker-Fahrzeug dargestellt. Figur 3 zeigt schließlich eine Wischeranlage für ein Linkslenker-Fahrzeug, bei dem die beiden Wischermodule 12, 13 aufgrund günstiger Einbauverhältnisse gleiche Getriebelagen aufweisen. Bei solchen Fahrzeugen wird unabhängig von der Ausführung der Wischeranlage im Linkslenker- und Rechtslenker-Fahrzeug nur ein Wischmodultyp benötigt. Des Weiteren sind im Hinblick auf Figur 1 in den Figuren 2 und 3 gleiche Teile mit gleichen Bezugszahlen versehen.

Um zur Verringerung der zu fertigenden Wischermodultypen die Wischermodule 12, 13 möglichst vielseitig verwenden zu können, ist die Steuerung 16 der Wischermodule 12, 13 über das Fahrzeug-Steuergerät 20 und die Bordnetz-Schnittstelle 19 zur Master- oder Slave-Steuerung frei konfigurierbar beziehungsweise umkonfigurierbar. Die Steuerung 16 der Wischermodule 12, 13 ist dabei in einer herstellerseitigen Grundeinstellung als Slave-Steuerung konfiguriert. Diese herstellerseitige feste Grundeinstellung enthält eine Vielzahl von Wischkennlinien mit Erfassung der oberen und unteren Umkehrlage sowie eine Grundstellung wie beispielsweise die erweiterte Parklage. In der herstellerseitigen Grundeinstellung ist ferner ein ggf. am Mastermodul abrufbarer Notlauf mit verkleinertem Wischfeld konfiguriert. Bei Wischermodulen mit unterschiedlichen Getriebelagen gemäß Figur 1 und 2 enthält die herstellerseitige Grundeinstellung außerdem eine vom Fahrzeug-Steuergerät 20 abrufbare Information über die Getriebelage des jeweiligen Wischermoduls 12, 13. Bei Wischeranlagen mit Wischermodulen gleicher Einbaulagen wird gemäß Figur 3 nur das fahrerseitige Wischermodul 12a an die Bordnetz-Schnittstelle 19 angeschlossen. Dadurch ist sichergestellt, dass bei der Konfiguration der Wischeranlage nur das fahrerseitige Wischermodul 12a zu einem Mastermodul werden kann. Bei einem Rechtslenker-Fahrzeug würde in der Wischeranlage nach Figur 3 demzufolge nur das rechte Wischermodul 12b als fahrerseitiges Wischermodul an die Bordnetz-Schnittstelle 19 angeschlossen und bei der Konfiguration der Wischeranlage zum Mastermodul umkonfiguriert.

Die Konfiguration der Wischeranlage erfolgt beim Fahrzeughersteller. Dort werden am Montageband zunächst das Fahrzeug-Steuergerät 20, die Wischermodule 12, 13 und der Wischerschalter 22 in das Fahrzeug eingebaut und angeschlossen. Dann wird über den Diagnoseanschluss 23 im Fahrzeug-Steuergerät 20 eine Fahrzeugkennung abgelegt, welche sowohl eine Information über die jeweilige Fahrzeugvariante als Rechtslenker- beziehungsweise Linkslenker-Ausführung enthält als auch eine Information über die Auswahl der vom Fahrzeugtyp abhängigen Wischfelder, Park- bzw. obere und untere Umkehrlagen beider Scheibenwischer umfasst. Die Steuerung 16 beider Wischermodule 12, 13 ist zunächst als Slave-Steuerung herstellerseitig konfiguriert.

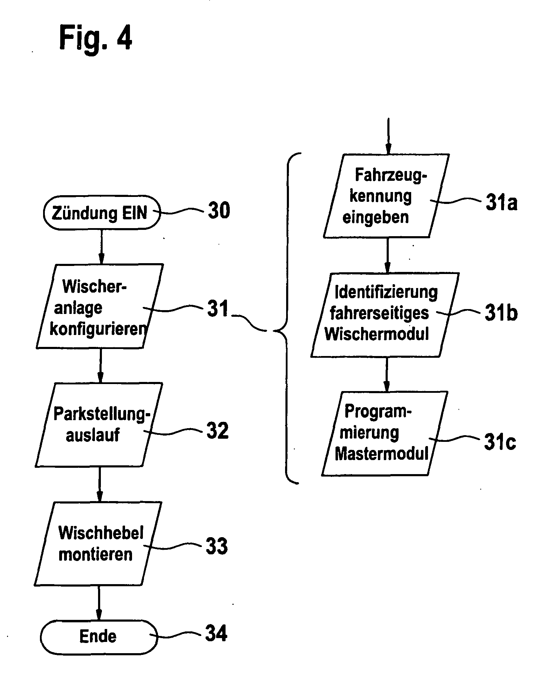

Gemäß dem Flussdiagramm in Figur 4 kann nun die Konfiguration der Wischeranlage durchgeführt werden. Hierzu wird zunächst in einem ersten Schritt 30 die Zündung beziehungsweise die Stromversorgung des Fahrzeugs (Klemme 15) eingeschaltet. In einem weiteren Schritt 31 wird nun über den Diagnoseanschluss 23 die Konfiguration der Wischeranlage ausgelöst. Die Konfiguration sowie die spätere Diagnose der Wischeranlage erfolgt dabei mittels eines für die elektronische Steuerung in Kraftfahrzeugen standardisierten KEYWORD 2000-Protokollformats der Bordnetz-Schnittstelle 19, die ihrerseits als standardisierte LIN-Eindraht-Schnittstelle (Local Interconnect Network) ausgeführt ist. Bei der Konfiguration der Wischeranlage wird zunächst im Programmschritt 31a die Fahrzeugkennung vom Fahrzeug-Steuergerät 20 auf die Bordnetz-Schnittstelle ausgegeben, welche die vom Fahrzeugtyp abhängigen Wischfelder, die Park- und Umkehrlagen sowie die von der Rechts-Linkslenker-Ausführung abhängige Anordnung des Master- und Slavemodules umfasst. Im Programmschritt 31b wird dann von den Wischermodulen 12, 13 aufgrund der in ihrer Steuerung 16 abgelegten Information ihrer Getriebelage je nach Ausführung als Rechtslenker- beziehungsweise Linkslenker-Fahrzeug das rechte oder linke Wischermodul 12, 13 als fahrerseitiges Wischermodul identifiziert. Anschließend wird im Programmschritt 31c das fahrerseitige Wischermodul 12 gemäß Figur 1 beziehungsweise Wischermodul 13 gemäß Figur 2 zu einem Mastermodul umkonfiguriert. Dabei werden die benötigten Wischfelder beider Wischermodule 12, 13 mit ihrer Parklage- und Umkehrlage-Position als Wischkennlinien in der Master-Steuerung 16 aus einer Vielzahl dort gespeicherter Kennlinien freigeschaltet. Ferner wird der Eingang der Master-Steuerung 16 für die Korrespondenz mit dem Fahrzeug-Steuergerät 20 und dem Wischerschalter 22 ebenso freigeschaltet wie der mit der seriellen Schnittstelle 21 verbundene Ausgang der Master-Steuerung 16. Über diese Schnittstelle 21 werden vom Mastermodul jeweils die Sollwerte für das Slavemodul übertragen und mit vom Slavemodul rückgemeldeten Istwerten verglichen. Die bei der Konfigurierung des Mastermodules über die Bordnetz-Schnittstelle an die Master-Steuerung 16 übertragenen Konfigurationsdaten werden dort nicht flüchtig gespeichert.

Nach dieser Konfiguration der Wischeranlage wird gemäß Figur 4 in einem weiteren Schritt 32 ein Parkstellungslauf durchgeführt. Durch den Parkstellungslauf wird sicher gestellt, dass beide Wischermodule 12, 13 ihre Abtriebsachse in die von der Fahrzeugkennung abhängige Parklage fahren. In dieser definierten Stellung der Wischermodule 12, 13 werden nun im Schritt 33 die Wischhebel beziehungsweise die Scheibenwischer 10, 11 montiert. Damit ist im Schritt 34 die Montage und Konfiguration der Wischeranlage nach Figur 1 und 2 beendet.

Bei Wischeranlagen, die gemäß Figur 3 nur mit ihrem fahrerseitigen Wischermodul 12a über die Bordnetz-Schnittstelle 19 am Fahrzeug-Steuergerät 20 angeschlossen sind, ist bei der Konfiguration der Programmschritt 31b nicht erforderlich, da dort ohnehin nur das an die Bordnetz-Schnittstelle 19 angeschlossene fahrerseitige Wischermodul als Mastermodul im Programmschritt 31c umkonfiguriert wird.

Die Wischerhebel der Scheibenwischer werden bevorzugt in einer erweiterten Parkstellung (EPS) montiert, da sich in dieser Stellung das Wischergestänge in einer Decklage befindet, so dass das Anzugsmoment bei der Montage der Wischhebel nicht an der Motorwelle angreift. Da aufgrund einer geringen Selbsthemmung der Wischergetriebe nicht ausgeschlossen werden kann, dass beim Transport und bei der Montage der Wischermodule die Decklage verlassen wurde, ist vor der Montage der Wischhebel ein erweiterter Parkstellungslauf erforderlich. Weil die Varianz der Wischfelder in die obere Umkehrlage gelegt ist und weil daher sämtliche Fahrzeugvarianten die gleiche erweiterte Parkstellung aufweisen, ist bei Wischermodulen mit ungleichen Getriebelagen dieser Parkstellungslauf bereits möglich, wenn die Wischeranlage noch nicht konfiguriert ist. Der Parkstellungslauf lässt sich durch einen entsprechenden Diagnosebefehl aktivieren. Da zu diesem Zeitpunkt die Wischhebel noch nicht montiert sind, kann der Parkstellungslauf auch für jedes Wischermodul separat erfolgen.

Durch die gemeinsame erweiterte Parkstellung (EPS) und variable obere Umkehrlagen lassen sich variable Wischfelder realisieren, so dass diese Wischeranlagen unabhängig von der Rechts- Linkslenker-Ausführung in zahlreichen Fahrzeugtypen einsetzbar sind. Dabei ist durch die Grundeinstellung der Wischermodule sichergestellt, dass mit einem entsprechenden Diagnosebefehl ein Parkstellungslauf ausgelöst und die erweiterte Parkstellung angefahren wird. Im Bedarfsfall kann zum Montieren der Scheibenwischer 10, 11 über das Fahrzeug-Steuergerät und dessen Diagnoseanschluss auch eine vorgegebene Montageposition der Wischermodule angefahren werden.

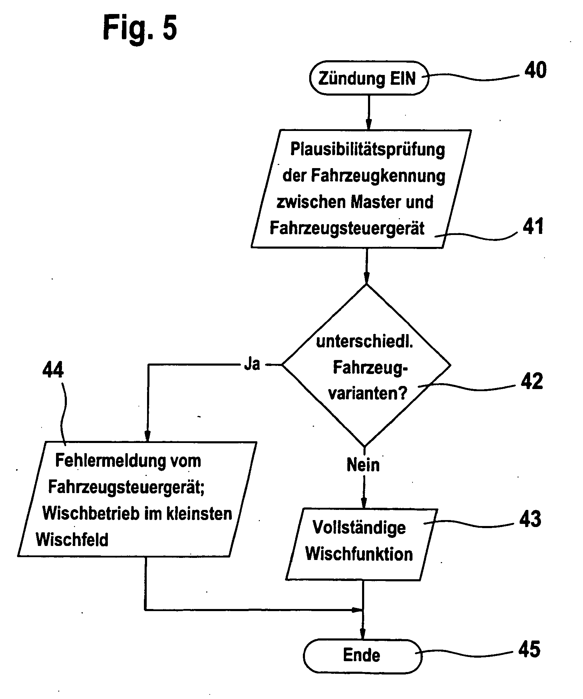

Es besteht die Möglichkeit, dass bereits konfigurierte Wischermodule und Fahrzeug-Steuergeräte, zum Beispiel aus Unfallfahrzeugen in defekten Fahrzeugen erneut verbaut werden. Falls in diesem Fall die Fahrzeugkennung im Fahrzeug-Steuergerät 20 nicht aktualisiert oder die Neukonfiguration der Wischeranlage vergessen wird, darf dies zu keinem sicherheitskritischen Zustand des Fahrzeugs führen. Das heißt, dass der Fahrer bereits vor der Inbetriebnahme der Wischeranlage über den Ausfall oder den fehlerhaften Einbau von Komponenten der Wischeranlage informiert wird. Außerdem soll für diese Fälle beim Anschluss beider Wischermodule 12, 13 an die Bordnetz-Schnittstelle 19 gemäß Figur 1 und 2 auch eine Umkonfigurierung der Steuerungen 16 der Wischermodule 12, 13 möglich sein, um so eine hohe Verfügbarkeit der Wischeranlage zu gewährleisten. Die dazu erforderlichen Maßnahmen werden durch Prüfprogramme durchgeführt, die mit den Flussdiagrammen gemäß Figur 5 bis 8 näher erläutert werden.

Um nach einem Eingriff in die Wischeranlage eine Kollision der Scheibenwischer durch falsche Daten in der Steuerung des Mastermoduls vermeiden zu können, wird gemäß Figur 5 mit dem Einschalten der Zündung beziehungsweise der Stromversorgung des Kraftfahrzeugs (Klemme 15) mit dem Programmschritt 40 im Fahrzeug-Steuergerät 20 ein Plausibilitäts-Prüfprogramm aufgerufen. Dazu wird im folgenden Programmschritt 41 über die Bordnetz-Schnittstelle 19 die Konfiguration des Mastermoduls aufgerufen. Im nachfolgenden Programmschritt 42 wird dann im Fahrzeug-Steuergerät 20 diese Konfiguration mit einer Konfiguration des Mastermodules verglichen, die in der im Fahrzeug-Steuergerät 20 abgelegten Fahrzeugkennung vorgegeben ist. Tritt dabei keine Abweichung auf, so wird im nachfolgenden Programmschritt 43 die Übereinstimmung der gespeicherten Wischfeld-Kennlinien des Master- und Slavemoduls mit denen der Fahrzeugkennung festgestellt und die vollständige Wischfunktion der Anlage freigegeben. Beim Auftreten einer Abweichung im Programmschritt 42 wird dagegen die Speicherung falscher Wischfeld-Kennlinien im Mastermodul erkannt und im Programmschritt 44 eine Fehlermeldung vom Fahrzeug-Steuergerät 20 abgegeben. Außerdem wird vom Fahrzeug-Steuergerät 20 in der Steuerung 16 des Mastermoduls ein Notlaufprogramm aufgerufen, das den Wischbetrieb der Wischeranlage in einem kleinsten Wischfeld ermöglicht. Anschließend wird im Programmschritt 45 das Prüfprogramm beendet.

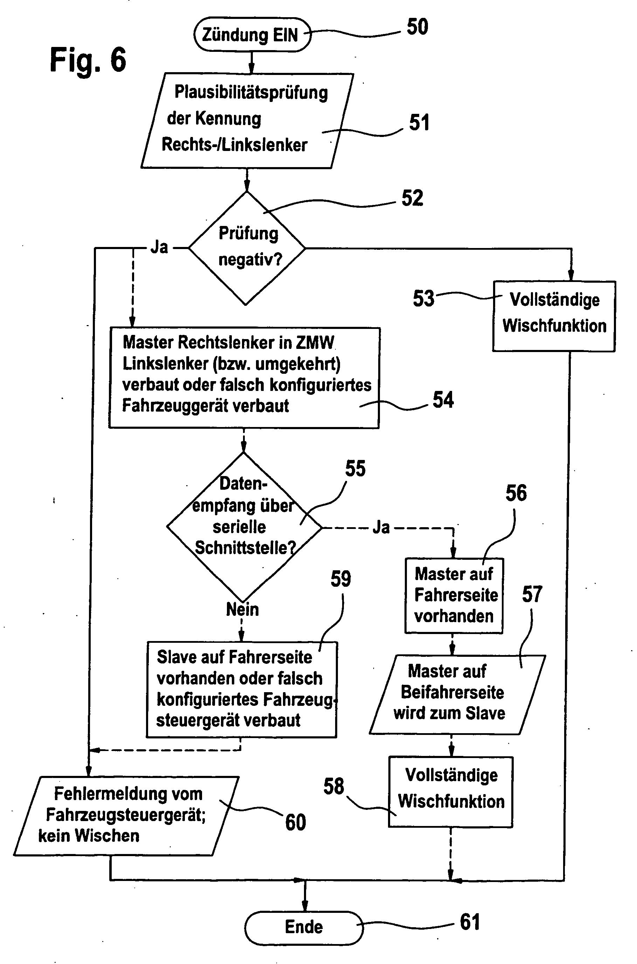

Zur Überprüfung der Links- beziehungsweise Rechtslenker-Ausführung der Wischeranlage mit den im Fahrzeug-Steuergerät 20 abgelegten Daten der Fahrzeugkennung wird bei Anlagen, bei denen gemäß Figur 1 und 2 beide Wischermodule an die Bordnetz-Schnittstelle angeschlossen sind, gemäß dem Flussdiagramm nach Figur 6 in einem ersten Programmschritt 50 die Zündung des Fahrzeugs (Klemme 15) eingeschaltet. In einem weiteren Programmschritt 51 wird nun vom Fahrzeug-Steuergerät 20 ein weiteres Plausibilitäts-Prüfprogramm aufgerufen, mit dem über die Bordnetz-Schnittstelle 19 die Konfiguration der Wischermodule 12, 13 als Master- oder Slavemodul abgefragt wird. Im folgendem Programmschritt 52 wird die abgefragte Konfiguration der Wischermodule mit der vorgegebenen Konfiguration verglichen, die in der im Fahrzeug-Steuergerät 20 abgelegten Fahrzeugkennung enthalten ist. Wird hierbei im Programmschritt 52 keine Abweichung festgestellt, wird gemäß Programmschritt 53 eine vollständige Wischfunktion der Wischeranlage festgestellt. Tritt jedoch im Programmschritt 52 eine Abweichung auf, wird damit im folgenden Programmschritt 60 vom Fahrzeug-Steuergerät 20 eine Fehlermeldung abgegeben und die Wischeranlage stillgesetzt. Da nach dem Programmschritt 52 die Fehlermöglichkeiten nicht näher eingegrenzt werden, wird mit der Fehlermeldung im Programmschritt 60 eine Neukonfiguration der Wischeranlage erforderlich. Das Prüfprogramm endet danach im Programmschritt 61.

Alternativ kann beim Auftreten einer Abweichung im Programmschritt 52 -wie in Figur 6 mit dem gestrichelt dargestellten Zweig des Flussdiagramms erkennbar ist- ggf. der Fehler noch weiter eingegrenzt werden. Im Programmschritt 54 wird dann festgestellt, dass entweder mindestens eines der Wischermodule als Slave- statt Mastermodul oder umgekehrt konfiguriert ist oder ein falsch konfiguriertes Fahrzeug-Steuergerät 20 verbaut wurde. Zur weiteren Fehleranalyse wird nun im folgenden Programmschritt 55 mittels Prüfdaten eine Datenübertragung zwischen beiden Wischermodulen über die serielle Schnittstelle 21 getestet. Mit dem Empfang von Daten am Wischermodul auf der Beifahrerseite erkennt das Prüfprogramm im Programmschritt 56, dass das fahrerseitige Wischermodul als Mastermodul konfiguriert ist. Durch einen Empfang von Daten am fahrerseitigen Wischermodul erkennt es ferner, dass in diesem Fall fälschlicherweise auch auf der Beifahrerseite ein Mastermodul verbaut worden ist. Die Steuerung 16 dieses beifahrerseitigen Mastermoduls wird nun im Programmschritt 57 über die Bordnetz-Schnittstelle 19 zu einem Slavemodul umkonfiguriert. Im folgenden Programmschritt 58 wird sodann ebenfalls die volle Funktionsfähigkeit der Wischeranlage festgestellt. Wird jedoch bei der Überprüfung der seriellen Schnittstelle 21 im Programmschritt 55 kein Datenempfang am beifahrerseitigen Wischermodul festgestellt, so erkennt das Prüfprogramm im folgenden Programmschritt 59, dass entweder auf der Fahrerseite ein Slavemodul oder dass ein falsch konfiguriertes Fahrzeug-Steuergerät 20 im Fahrzeug verbaut wurde. Für beide Fälle wird im folgenden Programmschritt 60 eine Fehlermeldung abgegeben.

Alternativ hierzu kann im Programmschritt 60 an Stelle einer Abschaltung der Wischeranlage auch eine Umkonfigurierung beider Wischermodule auf einen Notlauf gemäß der Grundeinstellung ihrer frei konfigurierbaren Steuerung vom Fahrzeug-Steuergerät 20 durchgeführt werden.

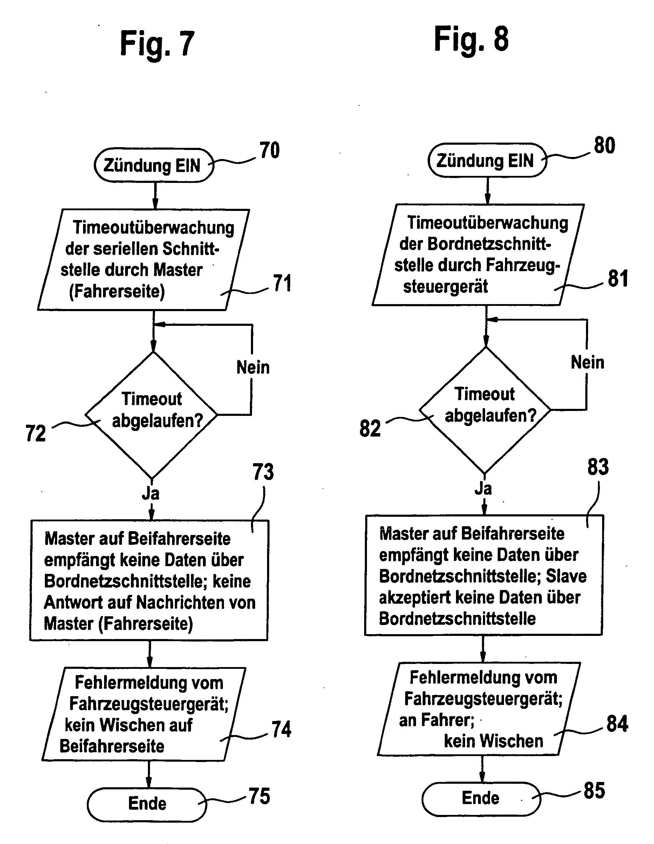

Im Flussdiagramm nach Figur 7 wird bei einer Wischeranlage, bei der gemäß Figur 3 nur das fahrerseitige Wischermodul 12a an die Bordnetz-Schnittstelle 19 des Fahrzeug-Steuergerätes 20 angeschlossen ist, geprüft, ob zwei bereits konfigurierte Mastermodule ohne eine anschließende Neukonfiguration der Wischeranlage verbaut worden sind. Dabei wird mit dem Einschalten der Zündung (Klemme 15) im Programmschritt 70 mit dem weiteren Prüfprogramm im Programmschritt 71 eine in der Steuerelektronik von Kraftfahrzeugen bekannte Timeout-Überwachung in dem mit der Bordnetz-Schnittstelle 19 verbundenen, fahrerseitigen Mastermodul aktiviert, welche den Datenaustausch auf der seriellen Schnittstelle 21 zwischen den Wischermodulen 12a und 12b überwacht. Dabei wird vom fahrerseitigen Mastermodul ein Sollwert-Signal auf die serielle Schnittstelle 21 gegeben und die Rückmeldung abgewartet. Bleibt die Rückmeldung jedoch aus, wird im Programmschritt 72 der Ablauf einer vorgegebenen Timeout-Zeit abgewartet und so dann im Programmschritt 73 festgestellt, dass das Mastermodul auf der Beifahrerseite über die Bordnetz-Schnittstelle 19 keine Daten empfängt und über die serielle Schnittstelle 21 auch keine Rückmeldungen an das Mastermodul auf der Fahrerseite abgibt. Im folgenden Programmschritt 74 wird sodann vom Fahrzeug-Steuergerät 20 eine Fehlermeldung abgegeben. Mit dem Wischermodul auf der Beifahrerseite ist daher kein Wischen möglich. Das Prüfprogramm endet sodann im Programmschritt 75.

Die hier beschriebene Timeout-Überwachung kann auch während des Wischbetriebs der Wischeranlage zyklisch oder dauerhaft in der Steuerung beider Wischermodule 12a und 12b aktiviert werden, da während des Wischbetriebs mit hoher Datenrate, zum Beispiel in einem Zyklus von 3ms Soll- und Istwerte auf der seriellen Schnittstelle 21 zwischen den Wischermodulen 12a und 12b ausgetauscht werden. Durch die Timeout-Überwachung kann dann unverzüglich eine Störung oder eine Unterbrechung der seriellen Schnittstelle 21 erkannt und eine entsprechende Fehlermeldung über das Fahrzeug-Steuergerät 20 abgegeben werden. Außerdem wird dann das Wischen auf der Beifahrerseite vom Slavemodul mit dem Ansteuern der Parkstellung beendet.

In einem weiteren Fehlerfall können bereits konfigurierte Wischermodule aus einem Rechtslenker-Fahrzeug in ein Linkslenker-Fahrzeug oder umgekehrt verbaut werden und es könnte ohne anschließender Neukonfiguration versucht werden, die Wischeranlage in Betrieb zu nehmen. Um dies bei einer Wischeranlage gemäß Figur 3, bei dem nur das fahrerseitige Wischermodul 12a über die Bordnetz-Schnittstelle 19 am Fahrzeug-Steuergerät 20 angeschlossen ist, zu verhindern, wird in einem Flussdiagramm gemäß Figur 8 ein weiteres Prüfprogramm mit dem Einschalten der Zündung (Klemme 15) im Programmschritt 80 aufgerufen. Dadurch wird im Programmschritt 81 im Fahrzeug-Steuergerät 20 eine Timeout-Überwachung der Bordnetz-Schnittstelle 19 aktiviert und zum Beispiel ein Prüfsignal auf die Bordnetz-Schnittstelle 19 abgegeben. Im nachfolgenden Programmschritt 82 wird der Eingang einer Signalrückmeldung von dem Wischermodul 12a überwacht und nach dem Ablauf einer vorgegebenen Timeout-Zeit wird im nachfolgenden Programmschritt 83 festgestellt, dass bei fehlender Signalrückmeldung das fahrerseitige Wischermodul 12a als Slavemodul keinen Dateneingang über die Bordnetz-Schnittstelle 19 akzeptiert und dass das beifahrerseitige Wischermodul 12b als Mastermodul durch den fehlenden Anschluss der Bordnetz-Schnittstelle 19 keine Daten empfängt. Damit wird im nachfolgenden Programmschritt 84 vom Fahrzeug-Steuergerät 20 eine Fehlermeldung abgegeben und die Wischeranlage wird stillgesetzt. Im Programmschritt 85 ist damit das Prüfprogramm beendet. Aufgrund eines zyklischen Datenaustausches auf der Bordnetz-Schnittstelle findet zweckmäßigerweise am Fahrzeug-Steuergerät und am Mastermodul fortlaufend eine Timeout-Überwachung der Bordnetz-Schnittstelle statt, um bei ihrem Ansprechen im Falle einer Störung im Mastermodul sofort ein Notfaufprogramm, z.b. ein Intervallwischen, Wischen im eingeschränktem Bereich oder Anfahren einer Parklage zu aktivieren. Die Zykluszeit beträgt hier zum Beispiel 100ms.

Die Prüfprogramme nach Figur 5 und 6 können ebenso wie die Prüfprogramme nach Figur 7 und 8 im Fahrzeug-Steuergerät 20 parallel zueinander oder nacheinander aufgerufen werden. Beim Auftreten einer Fehlermeldung wird vom Fahrzeug-Steuergerät 20 mittels einer Anzeige eine Neukonfiguration der Wischeranlage und/oder der Fahrzeugkennung angefordert. Im einfachsten Fall ist dabei eine Neueingabe der Fahrzeugkennung sowie eine Neukonfigurierung der Steuerung in den Wischermodulen in einer Kraftfahrzeug-Werkstatt über ein an das Fahrzeug-Steuergerät 20 anzuschließendes Diagnosegerät durchzuführen.

Die erfindungsgemäße Bestückung einer Wischeranlage mit frei konfigurierbaren Steuerungen der Wischermodule als Master- oder Slave-Steuerung ist nicht auf die in den Figuren 1 bis 3 dargestellten Wischeranlagen beschränkt. Dementsprechend können die Wischermodule auch in Wischeranlagen von größeren Fahrzeugen wie Omnibussen und schweren Nutzfahrzeugen mit drei Scheibenwischern verwendet werden. Dabei wird vorzugsweise das fahrerseitige Wischermodul mit einer Master-Steuerung konfiguriert und die Steuerungen der beiden übrigen Wischermodule über die serielle Schnittstelle zueinander parallel geschaltet und als Slave-Steuerungen konfiguriert, die dann von der Master-Steuerung des fahrerseitigen Wischermoduls vorzugsweise einzeln zyklisch angesteuert werden.

## Patentansprüche

1. Wischeranlage für Fahrzeug-Windschutzscheiben mit mindestens zwei Scheibenwischern (10, 11), die von jeweils einem Wischermodul (12, 13) bestehend aus Reversiermotor (14), Getriebe (15) und elektronischer Steuerung (16), angetrieben werden, wobei das fahrerseitige Wischermodul als Mastermodul über eine Bordnetz-Schnittstelle (19) an ein Fahrzeug-Steuergerät (20) angeschlossen und das beifahrerseitige Wischermodul als Slavemodul über eine serielle Schnittstelle (21) von dem Mastermodul anzusteuern ist, **dadurch gekennzeichnet, dass** die Steuerung (16) der Wischermodule (12, 13) über das Fahrzeug-Steuergerät (20) und die Bordnetz-Schnittstelle (19) zur Master- oder Slave-Steuerung frei konfigurierbar beziehungsweise umkonfigurierbar ist.

2. Wischeranlage nach Anspruch 1, **dadurch gekennzeichnet, dass** die Steuerung (16) der Wischermodule (12, 13) in einer herstellerseitigen Grundeinstellung als Slave-Steuerung konfiguriert ist.

3. Wischeranlage nach Anspruch 2, **dadurch gekennzeichnet, dass** die Steuerung der Wischermodule (12, 13) als herstellerseitig feste, abrufbare Grundeinstellung mindestens eine Wischkennlinie mit Erfassung einer unteren und oberen Umkehrlage, einer Grundstellung, insbesondere einer erweiterten Parklage und bei unterschiedlichen Getriebelagen eine abrufbare Information über die Getriebelage des Wischermoduls enthält.

4. Wischeranlage nach Anspruch 2, **dadurch gekennzeichnet, dass** in der herstellerseitigen Grundeinstellung ein Notlauf mit verkleinertem Wischfeld konfiguriert ist.

5. Wischeranlage nach einem der vorherigen Ansprüche, **dadurch gekennzeichnet, dass** die Steuerungen aller Wischermodule (12, 13) über die Bordnetz-Schnittstelle (19) an das Fahrzeug-Steuergerät (20) angeschlossen sind.

6. Wischeranlage nach einem der vorherigen Ansprüche, **dadurch gekennzeichnet, dass** die Steuerungen (16) der Wischermodule (12, 13) über einen an sich bekannten Diagnoseanschluss (23) des Fahrzeug-Steuergerätes (20) konfigurierbar beziehungsweise umkonfigurierbar sind.

7. Wischeranlage nach einem der vorherigen Ansprüche, **dadurch gekennzeichnet, dass** über eine in das Fahrzeug-Steuergerät (20) eingegebene beziehungsweise in ihm gespeicherte Fahrzeugkennung als Linkslenker- oder Rechtslenker-Fahrzeug die Steuerung des entsprechend links oder rechts angeordneten fahrerseitigen Wischermoduls als Master-Steuerung konfiguriert ist.

8. Wischeranlage nach einem der vorherigen Ansprüche, **dadurch gekennzeichnet, dass** in einer in das Fahrzeug-Steuergerät (20) eingegebene beziehungsweise in ihm gespeicherten Fahrzeugkennung für jedes Wischermodul eine Information über die Auswahl der vom Fahrzeugtyp abhängigen Wischkennlinien mit Erfassung einer oberen und unteren Umkehrlage abgelegt ist.

9. Wischeranlage nach Anspruch 8, **dadurch gekennzeichnet, dass** über die Fahrzeugkennung die Wischerkennlinien und Park- bzw. Umkehrlagen beider Wischermodule (12, 13) vom Fahrzeug-Steuergerät (20) in der Steuerung (16) des Mastermoduls freigeschaltet sind und dass die Steuerung des Mastermoduls die Sollwerte für das Slavemodul über die serielle Schnittstelle (21) an die Steuerung des Slavemoduls überträgt.

10. Wischeranlage nach Anspruch 7 oder 8, **dadurch gekennzeichnet, dass** nach dem Einschalten der Stromversorgung des Fahrzeugs (Klemme 15) das Fahrzeug-Steuergerät (20) in einem Prüfprogramm mit einer Plausibilitätsprüfung (41-44) die nach der Fahrzeugkennung vorgegebene Konfiguration des Mastermoduls (12; 13; 12a) mit der über die Bordnetz-Schnittstelle (19) aufrufbaren, vorhandenen Konfiguration der Master-Steuerung vergleicht und beim Auftreten einer Abweichung über das Fahrzeug-Steuergerät (20) ein Fehlersignal abgibt.

11. Wischeranlage nach Anspruch 10, **dadurch gekennzeichnet, dass** nach der Plausibilitätsprüfung beim Auftreten einer Abweichung das Fahrzeug-Steuergerät (20) in der Master-Steuerung ein Notlaufprogramm vorzugsweise für beide Wischermodule (12, 13) konfiguriert.

12. Wischeranlage nach Anspruch 10, **dadurch gekennzeichnet, dass** beim Anschluß beider Wischermodule (12, 13) an die Bordnetz-Schnittstelle (19) eine Plausibilitätsprüfung (51-54) eine im Fahrzeug-Steuergerät (20) abgelegte Links-/Rechtslenkerkennung mit den über die Bordnetz-Schnittstelle (19) aufrufbaren, vorhandenen Daten der Wischermodule (12, 13) vergleicht und beim Auftreten einer Abweichung über das Fahrzeug-Steuergerät (20) ein Fehlersignal abgibt.

13. Wischeranlage nach einem der vorherigen Ansprüche, **dadurch gekennzeichnet, dass** die Master-Steuerung und/oder Slave-Steuerung über die serielle Schnittstelle (21) Rückmeldesignale der Slave-Steuerung und/oder Sollwerte der Master-Steuerung in einer Timeout-Überwachung (71) erfasst und beim Ansprechen (72) der Timeout-Überwachung das Slavemodul in die Parklage steuert sowie eine Fehlermeldung (74) an das Fahrzeug-Steuergerät (20) abgibt.

14. Wischeranlage nach Anspruch 10, **dadurch gekennzeichnet, dass** beim Anschluss nur des fahrerseitigen Wischermoduls (12; 13) an die Bordnetz-Schnittstelle (19) das Fahrzeug-Steuergerät (20) in einem weiteren Prüfprogramm einen Datenaustausch auf der Bordnetz-Schnittstelle (19) in einer Timeout-Überwachung (81) erfasst und beim Ansprechen (82) der Timeout-Überwachung die Wischeranlage abschaltet sowie ein Fehlersignal (84) abgibt.

## Claims

1. Wiper system for vehicle windscreens, having at least two windscreen wipers (10, 11) which are each driven by a wiper module (12, 13) comprising a reversing motor (14), gear mechanism (15) and electronic control system (16), where the driver-side wiper module as a master module is connected to a vehicle controller (20) via an on-board vehicle electrical system interface (19) and the passenger-side wiper module as a slave module can be actuated by the master module via a serial interface (21), **characterized in that** the control system (16) of the wiper modules (12, 13) can be freely configured or reconfigured by means of the vehicle controller (20) and the on-board vehicle electrical system interface (19) in order to control the master or slave.

2. Wiper system according to Claim 1, **characterized in that** the control system (16) of the wiper modules (12, 13) is configured as a slave control system in a basic setting set by the manufacturer.

3. Wiper system according to Claim 2, **characterized in that** the control system of the wiper modules (12, 13) contains, as a manufacturer-defined retrievable basic setting, at least one wiping characteristic curve with detection of a lower and upper reversal position, a basic setting, in particular an extended park position, and, in the case of different gear mechanism positions, retrievable information about the gear mechanism position of the wiper module.

4. Wiper system according to Claim 2, **characterized in that** emergency operation with a reduced wiping area is configured in the basic setting set by the manufacturer.

5. Wiper system according to one of the preceding claims, **characterized in that** the control systems of all wiper modules (12, 13) are connected to the vehicle controller (20) via the on-board vehicle electrical system interface (19).

6. Wiper system according to one of the preceding claims, **characterized in that** the control systems (16) of the wiper modules (12, 13) can be configured or reconfigured by means of a diagnosis connection (23), which is known per se, of the vehicle controller (20).

7. Wiper system according to one of the preceding claims, **characterized in that**, by means of a vehicle identification, which is input into the vehicle controller (20) or is stored in the said vehicle controller, as a left-hand drive or right-hand drive vehicle, the control system of the driver-side wiper module which is correspondingly arranged on the left or right is configured as a master control system.

8. Wiper system according to one of the preceding claims, **characterized in that** information about the selection of the wiping characteristic curve, which is dependent on the type of vehicle, with detection of an upper and lower reversal position is stored in a vehicle identification, which is input into the vehicle controller (20) or stored in the said vehicle controller, for each wiper module.

9. Wiper system according to Claim 8, **characterized in that** the wiping characteristic curves and park and reversal positions of the two wiper modules (12, 13) are disconnected from the vehicle controller (20) in the control system (16) of the master module by the vehicle identification, and **in that** the control system of the master module transmits the setpoint values for the slave module to the control system of the slave module via the serial interface (21).

10. Wiper system according to Claim 7 or 8, **characterized in that**, after the power supply to the vehicle (terminal 15) is switched on, the vehicle controller (20) compares the configuration of the master module (12; 13; 12a) which is prespecified in accordance with the vehicle identification with the existing configuration of the master control system which can be retrieved via the on-board vehicle electrical system interface (19) in a checking program with a plausibility check (41-44), and outputs a fault signal via the vehicle controller (20) when there is a deviation.

11. Wiper system according to Claim 10, **characterized in that**, after the plausibility check, the vehicle controller (20) configures an emergency operation program, preferably for both wiper modules (12, 13), in the master control system when there is a deviation.

12. Wiper system according to Claim 10, **characterized in that** a plausibility check (51-54) compares a left-hand/right-hand drive identification which is stored in the vehicle controller (20) with the existing data about the wiper modules (12, 13) which can be retrieved via the on-board vehicle electrical system interface (19) when the two wiper modules (12, 13) are connected to the on-board vehicle electrical system interface (19), and outputs a fault signal via the vehicle controller (20) when there is a deviation.

13. Wiper system according to one of the preceding claims, **characterized in that** the master control system and/or slave control system detect/detects feedback signals from the slave control system and/or setpoint values from the master control system via the serial interface (21) during timeout monitoring (71) and, when timeout monitoring responds (72), move/moves the slave module to the park position and output/outputs a fault message (74) to the vehicle controller (20).

14. Wiper system according to Claim 10, **characterized in that**, when only the driver-side wiper module (12; 13) is connected to the on-board vehicle electrical system interface (19), the vehicle controller (20) detects data interchange on the on-board vehicle electrical system interface (19) during timeout monitoring (81) in a further checking program, and switches off the wiper system and outputs a fault signal (84) when timeout monitoring responds (82).

## Revendications

1. Installation d'essuie-glace pour des pare-brise de véhicule comportant au moins deux essuie-glace (10, 11) entraînés chacun par un module d'essuie-glace (12, 13) formé d'un moteur réversible (14), d'une transmission (15) et d'une commande électronique (16),
le module d'essuie-glace côté conducteur étant relié à l'appareil de commande du véhicule (20) comme module-maître, par l'interface (19) du réseau embarqué et le module d'essuie-glace côté passager est commandé comme module-esclave par une interface-série (21) à partir du module-maître,
**caractérisée en ce que**
la commande (16) des modules d'essuie-glace (12, 13) par l'appareil de commande (20) du véhicule et l'interface du réseau embarqué (19), peut être configurée ou reconfigurée librement comme commande maître ou esclave.

2. Installation d'essuie-glace selon la revendication 1,
**caractérisée en ce que**
la commande (16) des modules d'essuie-glace (12, 13) est configurée comme commande esclave dans le réglage de base par le fabricant.

3. Installation d'essuie-glace selon la revendication 2,
**caractérisée en ce que**
la commande des modules d'essuie-glace (12, 13) comporte comme réglage de base fixe, venant du fabricant, et qui peut être appelé, au moins une courbe caractéristique d'essuyage avec saisie d'une position d'inversion de mouvement inférieure et supérieure, une position de base notamment d'une position de rangement étendue et différentes positions de transmission sous forme d'une information qui peut être appelée par la position de la transmission du module d'essuie-glace.

4. Installation d'essuie-glace selon la revendication 2,
**caractérisée en ce que**
le réglage de base du fabricant comporte la configuration d'un fonctionnement de secours avec un champ d'essuyage réduit.

5. Installation d'essuie-glace selon l'une des revendications précédentes,
**caractérisée en ce que**
les commandes de tous les modules d'essuie-glace (12, 13) sont raccordées à l'appareil de commande (20) du véhicule par l'interface du réseau embarqué (19).

6. Installation d'essuie-glace selon l'une des revendications précédentes,
**caractérisée en ce que**
les commandes des modules d'essuie-glace (12, 13) peuvent être configurées ou reconfigurées par une connexion de diagnostic (23) connue en soi, de l'appareil de commande (20) du véhicule.

7. Installation d'essuie-glace selon l'une des revendications précédentes,
**caractérisée en ce que**
par une caractéristique du véhicule introduite ou enregistrée dans l'appareil de commande (20) du véhicule, comme véhicule de conduite à gauche ou de conduite à droite, on configure la commande du module d'essuie-glace côté conducteur correspondant au côté gauche ou au côté droit comme commande maître.

8. Installation d'essuie-glace selon l'une des revendications précédentes,
**caractérisée en ce que**
dans une caractéristique introduite ou enregistrée dans l'appareil de commande (20) du véhicule, pour chaque module d'essuie-glace on a une information concernant la sélection des courbes caractéristiques d'essuyage dépendant du type de véhicule avec saisie d'une position d'inversion haute et basse.

9. Installation d'essuie-glace selon la revendication 8,
**caractérisée en ce que**
par la caractéristique du véhicule on libère les caractéristiques d'essuyage et les positions de rangement et d'inversion des deux modules d'essuie-glace (12, 13) par l'appareil de commande (20) du véhicule dans la commande (16) du module-maître qui transmet les valeurs de consigne du module-esclave par l'interface-série (21) à la commande du module-esclave (10).

10. Installation d'essuie-glace selon la revendication 7 ou 8,
**caractérisée en ce qu'**
après le branchement de l'alimentation électrique du véhicule (borne 15) l'appareil de commande (20) du véhicule, dans un programme d'essai avec un contrôle de plausibilité (41-44), compare la configuration pré-définie en fonction de la caractéristique du véhicule du module-maître (12, 13, 12a) avec la configuration de la commande de maître existant et qui peut être appelée par l'intermédiaire de l'interface du réseau embarqué (19) et en cas de différence, l'appareil de commande (20) émet un signal de défaut.

11. Installation d'essuie-glace selon la revendication 10,
**caractérisée en ce qu'**
après un contrôle de plausibilité, s'il y a une différence, l'appareil de commande (20) du véhicule configure dans la commande maître un programme de fonctionnement de secours, de préférence pour les deux modules d'essuie-glace (12, 13).

12. Installation d'essuie-glace selon la revendication 10,
**caractérisée en ce qu'**
en cas d'un branchement des deux modules d'essuie-glace (12, 13) sur l'interface (19) du réseau embarqué, un contrôle de plausibilité (51-54) compare une caractéristique gauche droite enregistrée dans l'appareil de commande (20) du véhicule aux données existantes du module d'essuie-glace (12, 13) appelées par l'intermédiaire de l'interface du réseau embarqué (19) et en cas de différence l'appareil de commande (20) du véhicule génère un signal de défaut.

13. Installation d'essuie-glace selon l'une des revendications précédentes,
**caractérisée en ce que**
la commande maître et/ou la commande esclave saisit par l'interface-série (21), les signaux de retour de la commande esclave et/ou des valeurs de consigne de la commande maître par une surveillance de décompte de temps (71) et en cas de mise en oeuvre (72) de la surveillance de décompte de temps, le module-esclave est commandé en position de rangement et un message de défaut (74) est fourni par l'appareil de commande (20) du véhicule.

14. Installation d'essuie-glace selon la revendication 10,
**caractérisée en ce qu'**
en cas de branchement seulement du module d'essuie-glace (12, 13) côté conducteur sur l'interface (19) du réseau embarqué, dans un autre programme d'essai, l'appareil de commande (20) du véhicule saisit un échange de données sur l'interface (19) du réseau embarqué dans une surveillance de décompte de temps (81) et en cas de réponse (82) de la surveillance de décompte de temps, l'installation d'essuie-glace est coupée et un signal de défaut (84) est émis.
